# EUROPEAN PATENT APPLICATION

(11) **EP 2 157 761 A2**
(43) Date of publication of application: **24.02.2010**
(21) Application number: 09168058.7
(22) Date of filing: 18.08.2009
(51) Int. Cl.: H04L 29/06, H04L 12/28

(54) **Information processing apparatus, information processing method and information processing system for the cooperative operation of several appliances interconnected via a home network**

(30) Priority: 18.08.2008 JP 2008209551
(71) Applicant: Sony Corporation, Tokyo (JP)
(72) Inventor: Sakai, Shimon, TOKYO (JP); Aoyama, Keiichi, TOKYO (JP); Ode, Naoki, TOKYO (JP); Ebata, Masayuki, TOKYO (JP)
(74) Representative: Thévenet, Jean-Bruno

(57) **Abstract**

An information processing apparatus (10) includes: an external device's information obtaining unit (101) for obtaining external device's information containing held function's information on functions held by an external device (20) from the network-connected external device; an application obtaining unit (119) for obtaining an application used for utilizing a function requested to be executed by the external device (20) from a network-connected application providing server, the function being contained in the held function's information; and an external device's function execution request unit (109) for requesting the external device (20) to execute a function held by the external device (20) based on the obtained external device's information and the application. The system comprising the information processing apparatus (10) and the external device (20) is capable, without a home server, of mutually utilizing the functions held by respective devices connected via a home network so that said devices may operate cooperatively.

## Description

### BACKGROUND OF THE INVENTION

### FIELD OF THE INVENTION

The present invention relates to an information processing apparatus, information processing method and information processing system.

### DESCRIPTION OF THE RELATED ART

There have been proposed various systems for connecting a plurality of devices to a home network installed in a home to cooperatively operate the devices or to perform remote control. There may be cited, as one example of such a system, an example in which a telephone connected to a telephone line and a television are associated with each other so that a sound volume of the television is automatically reduced in response to an incoming call.

There is disclosed in Japanese Patent Application Laid-Open No. 2006-319960 a system for causing a home server connected to a home network to hold information on devices to be associated therewith or association control information, thereby realizing cooperation between the devices within the home network. In the system, the home server stores therein information on each device and information on operation contents capable of being realized through cooperation between two or more devices, and associates the devices connected to the home network based on the information to establish device cooperation.

### SUMMARY OF THE INVENTION

However, since the system disclosed in Japanese Patent Application Laid-Open No. 2006-319960 requires a home server for establishing cooperation between devices, there was an issue that when the home server is not present or when information on a device to be associated with the home server is not present, the device cooperation may not be established.

Thus, when the device cooperation may not be established in the system disclosed in Japanese Paten Application Laid-Open No. 2006-319960, there occurs an issue in which information obtained at a device is temporarily stored and the obtained information is input again for other device.

The present invention has been therefore made in terms of the above issues, and it is desirable to provide a novel and improved information processing apparatus, information processing method and information processing system capable of mutually utilizing the functions held by respective devices among the devices connected via a home network easily.

According to an embodiment of the present invention, there is provided an information processing apparatus including: an external device's information obtaining unit for obtaining external device's information containing held function's information on functions held by an external device from the network-connected external device; an application obtaining unit for obtaining an application used for utilizing a function requested to be executed by the external device from a network-connected application providing server, the function being contained in the held function's information; and an external device's function execution request unit for requesting the external device to execute a function held by the external device based on the obtained external device's information and the application.

With the structure, the external device's information obtaining unit obtains external device's information containing held function's information on the functions held by the external device from the network-connected external device. The application obtaining unit obtains an application used for utilizing a function requested to be executed by the external device from a network-connected application providing server, the function being contained in the held function's information. Further, the external device's function execution request unit requests the external device to execute the function held by the external device based on the obtained external device's information and application.

The external device's information obtaining unit may obtain server information on a server over a network utilized for the function described in the held function's information from the external device which has obtained the held function's information, and the application obtaining unit may specify the application to be obtained from the application providing server based on the server information.

An external device's function execution request unit may specify a protocol used for communication with the server used in the function based on the server information.

The information processing apparatus may include function information on functions executable in the information processing apparatus, and the external device's function execution request unit may request the external device to execute functions which are not described in the function information on the executable functions and are contained in the held function's information.

The external device's information obtaining unit may obtain, from the external device, related function information on other functions of the external device associated with the function whose execution can be requested to the external device.

According to another embodiment of the present invention, there is provided an information processing method including the steps of: obtaining external device's information containing held function's information on functions held by an external device from the network-connected external device; obtaining an application used for utilizing a function requested to be executed by the external device from a network-connected application providing server, the function being contained in the held function's information; and requesting the external device to execute functions held by the external device based on the obtained external device's information and the application.

According to a still another embodiment of the present invention, there is provided an information processing system including an information processing apparatus and an external device. The information processing apparatus includes an external device's information obtaining unit for obtaining external device's information containing held function's information on functions held by an external device from the network-connected external device; an application obtaining unit for obtaining an application used for utilizing a function requested to be executed by the external device from a network-connected application providing server, the function being contained in the held function's information; and an external device's function execution request unit for requesting the external device to execute a function held by the external device based on the obtained external device's information and the application. The external device includes a held function's information transmission unit for transmitting held function's information on executable functions held by the information processing apparatus to the network-connected information processing apparatus; and a function execution unit for executing the executable function requested to execute from the information processing apparatus, and an external device transmits related function information on other functions associated with the function requested to execute from the information processing apparatus to the information processing apparatus when the function execution request is made from the information processing apparatus.

According to the embodiments of the present invention described above, it is possible to mutually utilize the functions held by respective devices among the devices connected via a home network easily.

### BRIEF DESCRIPTION OF THE DRAWINGS

FIG. 1 is an explanatory diagram for explaining an information processing system according to a first embodiment of the present invention;
FIG. 2 is a block diagram for explaining a structure of an information processing apparatus according to the first embodiment;
FIG. 3A is a block diagram for explaining a structure of an external device's information obtaining unit according to the first embodiment;
FIG. 3B is a block diagram for explaining a structure of an external device's function execution request unit according to the first embodiment;
FIG. 4 is a block diagram for explaining a structure of an external device according to the first embodiment;
FIG. 5A is an explanatory diagram for explaining functions held by the information processing apparatus and the external device according to the first embodiment;
FIG. 5B is an explanatory diagram for explaining functions held by the information processing apparatus and the external device according to the first embodiment;
FIG. 6A is a sequence diagram for explaining an information processing method according to the first embodiment;
FIG. 6B is a sequence diagram for explaining an information processing method according to the first embodiment;
FIG. 6C is a sequence diagram for explaining an information processing method according to the first embodiment;
FIG. 7 is an explanatory diagram for explaining the information processing method according to the first embodiment; and
FIG. 8 is a block diagram for explaining a hardware structure of the information processing apparatus according to each embodiment of the present invention.

### DETAILED DESCRIPTION OF THE PREFERRED EMBODIMENTS

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

The explanation will be made in the following order:
(1) First embodiment
   (1-1) On information processing system
   (1-2) On structure of information processing apparatus
   (1-3) On structure of external device
   (1-4) On functions held by apparatus
   (1-5) On information processing method
(2) On hardware structure of information processing apparatus according to each embodiment of the present invention
(3) Conclusion

### (First embodiment)

### <On information processing system>

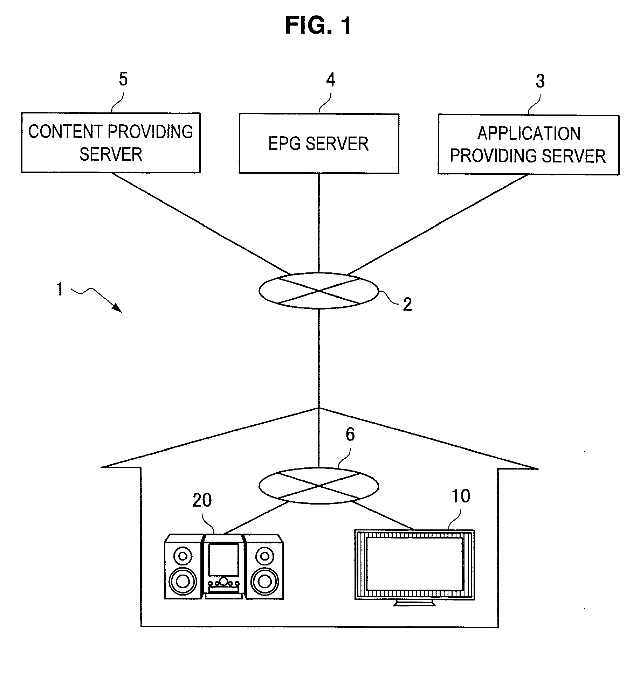

At first, an information processing system according to a first embodiment of the present invention will be described in detail with reference to FIG. 1. FIG. 1 is an explanatory diagram for explaining the information processing system according to the present embodiment.

The information processing system 1 according to the present embodiment includes a communication network 2, an application providing server 3 connected via the communication network 2, an Electronic Program Guide (EPG) server 4 and a content providing server 5 as shown in FIG. 1, for example. The communication network 2 is connected with the information processing apparatus 10 and an external device 20 both of which are connected with each other via a home network 6.

The communication network 2 is a communication line network for connecting, in a bidirectional communication or unidirectional communication enable manner, the information processing apparatus 10 and the external device 20 both of which are connected with each other via the home network 6, and various servers such as the application providing server 3, the EPG server 4 and the content providing server 5. The communication network is configured to have a public line network such as Internet, Next Generation Network (NGN), telephone line network, satellite communication network or broadcast communication path, or a dedicated line network such as Wide Area Network (WAN), Local Area Network (LAN), Internet Protocol-Virtual Private Network (IP-VPN), Ethernet (registered trademark) or wireless LAN, irrespective of being wired or wireless.

The application providing server 3 provides the information processing apparatus 10 or the external device 20 with an application (such as widget) which is executable in these apparatuses and is required to execute a specific function for the apparatuses. The application providing server 3 may be operated by a manufacturer of the information processing apparatus 10 or the external device 20, or may be operated by a third party in response to a provision of various applications from the manufacturers of the apparatuses or the third party.

The EPG server 4 is directed for transmitting information on programs such as video contents provided from a content providing server installed in a broadcast station or the like to the information processing apparatus 10 or the external device 20 via the communication network 2. The EPG server 4 is configured to have, for example, a HyperText Transfer Protocol (HTTP) server, and provides a HTML document constituting EPG data to the information processing apparatus 10 or the external device 20 via the communication network 2. The information on programs includes information such as program information (containing still image information), program scheduling information, group information, complementary information or program segment information, or meta data such as information on actors appearing in programs or information on music tracks played in programs.

The content providing server 5 associates contents such as video contents, music contents or photograph contents with location information or meta data of the contents for management. The content providing server 5 provides the content data or meta data of the contents managed by the content providing server 5 with or without compensation in response to a request from the information processing apparatus 10 or the external device 20 both of which are connected with each other via the communication network 2.

The home network 6 is a communication line network for connecting the information processing apparatus 10 and the external device 20 in a bidirectional communication or unidirectional communication enable manner. The communication network is configured to have a public line network such as Internet, NGN (Next Generation Network), telephone line network, satellite communication network or broadcast communication path, or a dedicated line network such as WAN (Wide Area Network), LAN (Local Area Network), IP-VPN (Internet Protocol-Virtual Private Network), Ethernet (registered trademark) or wireless LAN, irrespective of being wired or wireless.

The information processing apparatus 10 can obtain a list of contents such as video contents, music contents or photograph contents from the content providing server 5, and reproduce the contents described in the obtained list of contents. The information processing apparatus 10 can obtain EPG data on specific contents from the EPG server 4 or obtain an application for realizing a specific function from the application providing server 3.

FIG. 1 illustrates the information processing apparatus 10 by way of example of a TV receiver, but the information processing apparatus 10 is not limited to the receiver. For example, the information processing apparatus 10 may be a computer device such as personal computer or server, or a home information appliance having a networked communication function such as DVD/HDD recorder, audio player, cell phone, Personal Digital Assistant (PDA), digital camera, home game player or digital video camera. Further, the information processing apparatus 10 may be a portable device which a subscriber can carry, such as portable game player, PHS or portable video/audio player.

The external device 20 can obtain a list of contents such as video contents, music contents or photograph contents from the content providing server 5, and reproduce the contents described in the obtained list of contents. The external device 20 can obtain EPG data on specific contents from the EPG server 4, or obtain an application for realizing a specific function from the application providing server 3.

FIG. 1 illustrates the external device 20 by way of example of an audio player, but the external device 20 is not limited to the device. For example, the external device 20 may be a computer device such as a personal computer or server, or a home information appliance having a networked communication function such as DVD/HDD recorder, cell phone, PDA (Personal Digital Assistant), digital camera, home game player or digital video camera. The information processing apparatus 10 may be a portable device which a subscriber can carry, such as portable game player, PHS or portable video/audio player.

The information processing apparatus 10 and the external device 20 have specific functions (such as content reproducing function, content purchasing function, content information displaying function, content audio recording/image recording and the like), respectively. The information processing apparatus 10 and the external device 20 according to the present embodiment can operate in association with each other as described below. A function not held by one apparatus is executed by the other apparatus so that a user can see that the apparatuses execute their non-holding functions, respectively.

The discrimination between the information processing apparatus 10 and the external device 20 is merely relative, and possibly the information processing apparatus 10 may function as the external device and the external device 20 may function as the information processing apparatus 10.

The information processing apparatus 10 and the external device 20 will be detailed below again.

### <On structure of information processing apparatus>

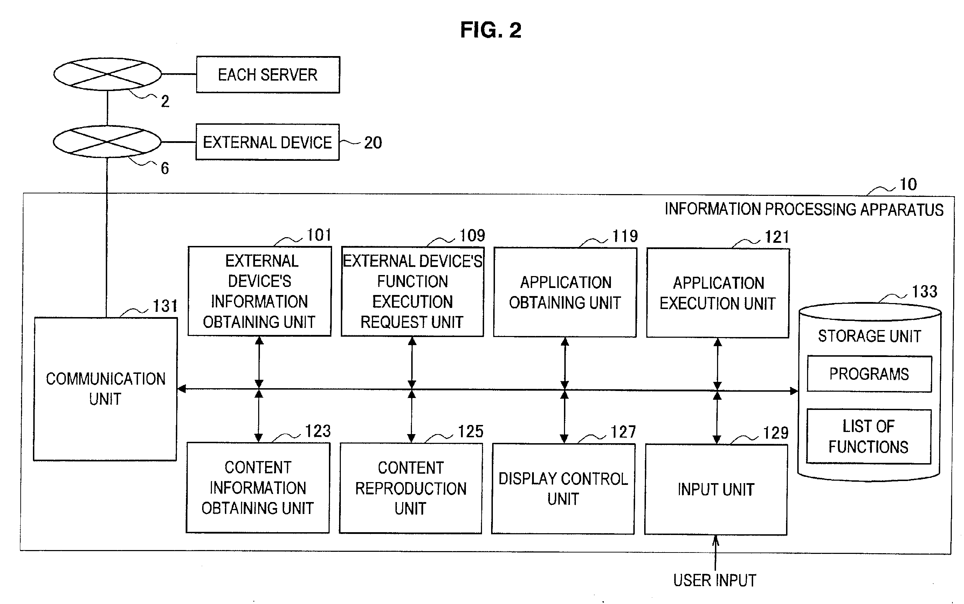

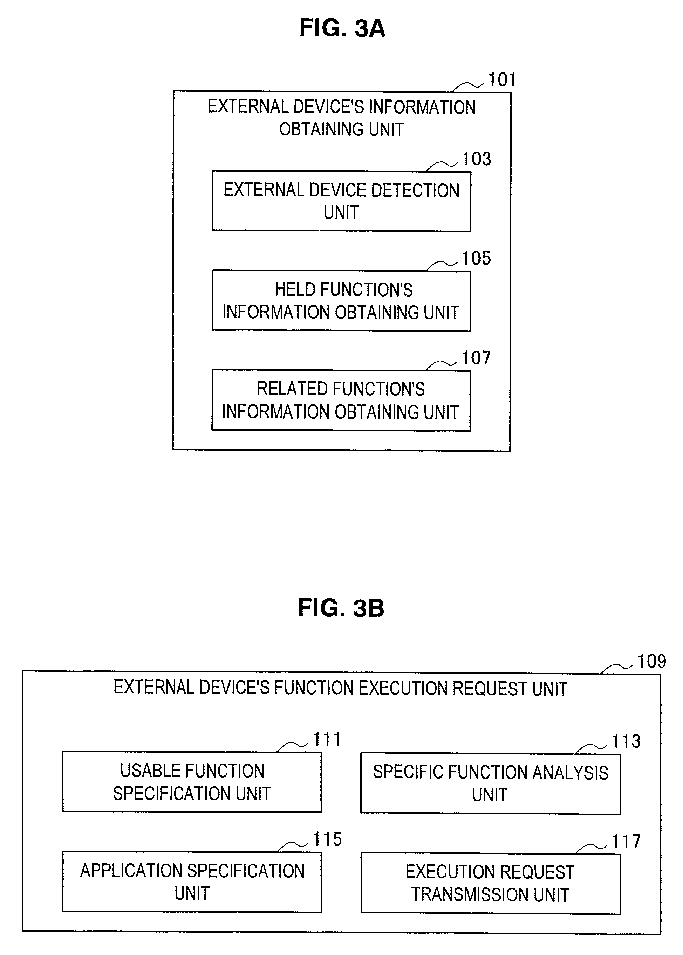

Next, a structure of the information processing apparatus according to the present embodiment will be described in detail with reference to FIGS. 2 to 3B. FIG. 2 is a block diagram for explaining a structure of the information processing apparatus according to the present embodiment. FIG. 3A is a block diagram for explaining a structure of an external device's information obtaining unit according to the present embodiment, and FIG. 3B is a block diagram for explaining a structure of an external device's function execution request unit according to the present embodiment.

The information processing apparatus 10 according to the present embodiment mainly includes an external device's information obtaining unit 101, an external device's function execution request unit 109, an application obtaining unit 119, an application execution unit 121, a content information obtaining unit 123, a content reproduction unit 125, a display control unit 127, an input unit 129, a communication unit 131 and a storage unit 133 as shown in FIG. 2, for example.

The external device's information obtaining unit 101 is configured to have Central Processing Unit (CPU), Read Only Memory (ROM), Random Access Memory (RAM) or the like. The external device's information obtaining unit 101 detects the presence of the external device 20 connectable to the information processing apparatus 10, and obtains external device's information containing held function's information on functions held by the connected external device 20. The external device's information obtaining unit 101 can obtain related function information on other functions relating to the execution-requested function by the information processing apparatus 10.

More specifically, the external device's information obtaining unit 101 has an external device detection unit 103, a held function's information obtaining unit 105 and a related function information obtaining unit 107 as shown in FIG. 3A, for example.

At first, there will be described an operation of detecting the presence of the connectable external device 20 by the external device's information obtaining unit 101, that is, the function of the external device detection unit 103. The external device detection unit 103 uses a protocol such as universal plug and play (UPnP) or Multicast DSN to retrieve other devices within the home network 6 via the communication unit 123. The external device detection unit 103 obtains information on IP address or the like of the responded external device 20 via the communication unit 131. The obtained information on IP address or the like of the external device 20 can be utilized by each processing unit included in the information processing apparatus 10. The obtained information on IP address or the like of the external device 20 may be recorded in the storage unit 133 described later. The processing of detecting the presence of the external device 20 connectable to the external device detection unit 103 is performed at any timing such as when a power supply of the information processing apparatus 10 is turned ON, when the user instructs to retrieve a device or every predetermined period.

An operation of obtaining external device's information by the external device's information obtaining unit 101 will be described below. The held function's information obtaining unit 105 of the external device's information obtaining unit 101 transmits a request of transmitting held function's information on the functions held by the external device 20 to the detected external device 20. When the held function's information is transmitted from the external device 20 which has received the held function's information transmission request, the held function's information obtaining unit 105 obtains the information transmitted via the communication unit 131. The obtained held function's information is transmitted to the external device's function execution request unit 109 described later. The held function's information obtaining unit 105 may record the obtained held function's information in the storage unit 133 described later.

The held function's information is a list of functions (that is, services executable by the external device 20) held by the external device 20. The functions (executable services) held by the external device 20 are assigned with abstract and general names such as "Purchase" or "Player".

When a function usable in the information processing apparatus 10 is specified from the list of functions (services) described in the obtained held function's information by the external device's function execution request unit 109 described later, the held function's information obtaining unit 105 transmits a request of transmitting detailed information on the specified function to the external device 20. When the detailed information on the specified function is received from the external device 20 which has received the transmission request, the held function's information obtaining unit 105 transmits the received information to the external device's function execution request unit 109.

The processing of transmitting a request of transmitting the detailed information on the specified function as described above can be performed at any timing.

With the processings described above, the held function's information obtaining unit 105 can obtain the external device's information containing held function's information from the external device 20.

Subsequently, there will be described an operation of obtaining related function information on other functions associated with the execution-requested function by the information processing apparatus 10 by the external device's information obtaining unit 101, that is, the function of the related function's information obtaining unit 107. When a certain function of the external device 20 is specified by the external device's function execution request unit 109 described later, the information processing apparatus 10 transmits a notification, query, execution request and the like on the specified function to the external device 20. Then, the external device 20 transmits the related function information on other functions associated with the execution-requested function to the information processing apparatus 10. The related function's information obtaining unit 107 receives the related function's information transmitted from the external device 20 via the communication unit 131. The related function's information obtaining unit 107 transmits the obtained related function's information to the external device's function execution request unit 109 described later. The related function's information transmitted from the external device 20 relates to information on other functions of the external device 20 previously associated with the execution request function to the external device 20. The related function's information obtaining unit 107 may record the obtained related function's information in the storage unit 133 described later.

For example, there will be considered a case in which the information processing apparatus 10 makes the "Purchase" function execution request to the external device 20 to request the music content purchase processing. There is assumed such that the external device 20 previously records therein the function information on the functions executable in the external device. At this time, the external device 20 refers to the held function's information, and determines the presence of the function associated with the execution-requested "Purchase" function. Consequently, when the "Player (music content reproduction function)" associated with the "Purchase" function is present, the external device 20 transmits the information on the "Player" function as the related function information to the information processing apparatus 10.

On obtaining the related function information, the information processing apparatus 10 and the external device 20 can perform more cooperative operations. For example, in the above case, the functions executable in the external device 20 are automatically disclosed from the external device 20 to the information processing apparatus 10, such as "content purchase content reproduction → sound quality setting". Consequently, the user of the information processing apparatus 10 can cooperatively operate a plurality of functions of the external device 20.

The external device's function execution request unit 109 is configured to have, for example, CPU, ROM, RAM or the like, and requests the external device 20 connectable to the information processing apparatus 10 to execute the functions held by the external device. The external device's function execution request unit 109 further includes a usable function specification unit 111, a specific function analysis unit 113, an application specification unit 115 and an execution request transmission unit 117 as shown in FIG. 3B, for example.

The usable function specification unit 111 refers to the held function's information transmitted from the external device's information obtaining unit 101, and specifies the held functions of the external device 20 usable in the information processing apparatus 10. More specifically, the usable function specification unit 111 compares the function information on the functions executable in the information processing apparatus 10 with the transmitted held function's information, which are recorded in the storage unit 133 described later, to specify the usable functions. In this case, the usable function specification unit 111 specifies a function which is not described in the function information on the executable functions and is contained in the held function's information as a usable function. The usable function specification unit 111 transmits a specification result to the external device's information obtaining unit 101. The usable function specification unit 111 can transmit the specification result to the display control unit 127 described later and request to display the specification result on the display unit (not shown).

The specific function analysis unit 131 analyzes detailed information on the specified function transmitted from the external device's information obtaining unit 101. The detailed information on the specified function is a general Application Program Interface (API) relating to the function, or the like, for example. The specific function analysis unit 113 can analyze the general API to specify the information on a server over the network utilized by the specified function or a type of the information utilized in the specified function. The above information on a server over the network includes information on a server's user interface specification, a protocol used for communication with the server, and the like, for example.

For example, in terms of the "Purchase" function (service) of purchasing contents from the server over the network, the detailed information transmitted from the external device 20 includes information described later. In other words, there is transmitted, as the server information, the information describing therein a name of the content providing server utilized in the "purchase" service, a user interface of the content providing server, and a protocol used for communication with the content providing server. The type information on the contents usable in the "Purchase" service (such as music contents, video contents, still image contents, book contents) is also transmitted as the detailed information on the function. Such detailed information is obtained so that the general "Purchase" function is defined in the detailed function such as "Purchase of purchasing contents from a server A", for example.

The specific function analysis unit 113 transmits the analysis result of the detailed information transmitted from the external device's information obtaining unit 101 to the application specification unit 115 described later. Further, the specific function analysis unit 113 may record the analysis result of the detailed information in the storage unit 133 described later.

The application specification unit 115 specifies an application required to utilize a function specified from among the functions held in the external device 20 based on the analysis result transmitted from the specific function analysis unit 113. In order to utilize the function of the external device 20 specified by the usable function specification unit 111, it is necessary to have an application for utilizing the function containing Graphical User Interface (GUI). However, the specific application may not be mounted on the information processing apparatus 10. Thus, the application specification unit 115 specifies the application required for utilizing the function of the external device 20 to retrieve the storage unit 133 or the like described later, for example, thereby determining whether the application is mounted. When the necessary application is not mounted on the information processing apparatus 10, the application specification unit 115 transmits the fact to the application obtaining unit 119 described later.

When receiving the fact that a specific function held by the external device 20 is requested to execute from the application execution unit 121 or the input unit 129 described later, the execution request transmission unit 117 transmits a function execution request to the external device 20. The execution request transmission unit 117 may transmit a confirmation request of confirming an execution status of the function to the external device 20 which has transmitted the function execution request, thereby confirming the execution status of the function.

The application obtaining unit 119 is configured to have CPU, ROM, RAM or the like, for example. The application obtaining unit 119 obtains an application required for utilizing a specific function of the external device 20 from the application providing server 3 present over the network based on the determination result transmitted from the application specification unit 115. In obtaining an application, the application obtaining unit 119 obtains an appropriate application from the application providing server 3 based on the name of the content providing server, the user interface of the content providing server, the protocol used for communication with the content providing server, and the like which are obtained from the server information.

The application obtaining unit 119 records the application obtained from the application providing server 3 in the storage unit 133 or the like described later, for example.

The application execution unit 121 is configured to have, for example, CPU, ROM, RAM or the like, and executes the application obtained by the application obtaining unit 119 from the application providing server 3 or the application (program) stored in the storage unit 217 described later. The application execution unit 121 can receive a signal corresponding to the user-input processing via the input device from the input unit 129 described later, or can request the display control unit 127 described later to display various items of information when executing the application. The application execution unit 121 can utilize attribute information and the like on the contents transmitted from the content information obtaining unit 123 described later. When the application being executed is operated so that a signal of starting to execute the function held by the external device 20 is transmitted from the input unit 129 described later, the application execution unit 121 transmits the fact to the external device's function execution request unit 109. The application execution unit 121 can refer to various parameters or database recorded in the storage unit 133 described later when executing the application.

The content information obtaining unit 123 is configured to have CPU, ROM, RAM or the like, for example. The content information obtaining unit 123 obtains contents from the content providing server 5 present over the network or obtains attribute information of the EPG data on certain contents.

The content information obtaining unit 123 transmits the content data obtained from the content providing server 5 to the content reproduction unit 125 described later. The content information obtaining unit 123 may store the obtained content data in the storage unit 133 described later.

The content information obtaining unit 123 transmits the attribute information of the EPG data obtained from the EPG server 4 to the content reproduction unit 125 or the application execution unit 121 described later. The content information obtaining unit 123 may store the attribute information of the obtained EPG data in the storage unit 133 described later. The content information obtaining unit 123 can display the obtained attribute information on the display unit (not shown) via the display control unit 127.

The content reproduction unit 125 is configured to have, for example, CPU, ROM, RAM or the like, and performs a processing of reproducing the content data transmitted from the content information obtaining unit 123. More specifically, the content reproduction unit 125 decodes the content data transmitted from the content information obtaining unit 123 to perform the processing of reproducing the decoded content data. At this time, the content reproduction unit 125 may perform the content reproduction processing while decoding the content data, and may perform the content reproduction processing after the completion of the decoding of the content data. The content reproduction unit 125 can utilize the data or database recorded in the storage unit 133 described later.

The display control unit 127 is configured to have, for example, CPU, ROM, RAM or the like, and each processing unit included in the information processing apparatus 10 according to the present embodiment performs display control when displaying various items of data or information on the display unit (not shown). The display control unit 127 may refer to various parameters or database recorded in the storage unit 133 or the like described later when performing the above processings, or may execute various programs recorded in the storage unit 133 or the like described later.

The input unit 129 is configured to have CPU, ROM, RAM, input device or the like, for example. The input unit 129 converts an operation conducted on various input switches such as content selection switch, reproduction switch and stop switch provided in the information processing apparatus 10 or on a remote controller into a predetermined signal, and transmits the signal to the corresponding processing unit. The operation conducted on the input switch or remote controller as described above may include an operation of obtaining contents or content attribute information from the content providing server 5, an operation of obtaining the EPG data on specific contents from the EPG server 4, and the like.

The communication unit 131 is configured to have, for example, CPU, ROM, RAM, communication device or the like, and performs communication control on various items of data exchanged between the information processing apparatus 10 and the external device 20 and between the information processing apparatus 10 and various servers.

More specifically, the communication unit 131 transmits various items of data or signals to the application providing server 3, the EPG server 4, the content providing server 5 or the external device 20 in response to a request from each processing unit provided in the information processing apparatus 10 according to the present embodiment. The communication unit 131 receives various items of data or signals transmitted from the application providing server 3, the EPG server 4, the content providing server 5 or the external device 20, and transmits the same to each processing unit provided in the information processing apparatus 10 according to the present embodiment.

The communication unit 131 can utilize the storage unit 133 described later as a transmission/reception buffer.

The storage unit 133 stores therein programs to be executed by the application execution unit 121, or a list of functions as function information on the functions executable by the information processing apparatus 10. In addition thereto, the storage unit 133 may store therein various items of content data. The storage unit 133 may appropriately record therein various parameters or processings' progresses to be saved by the information processing apparatus 10 according to the present embodiment when performing some processings, or various items of database. The storage unit 133 can be freely read or written by the external device's information obtaining unit 101, the external device's function execution request unit 109, the application obtaining unit 119, the application execution unit 121, the content information obtaining unit 123, the content reproduction unit 125, the display control unit 127, the input unit 129, the communication unit 131 and the like.

One example of the function of the information processing apparatus 10 according to the present embodiment has been described above. Each constituent described above may be configured by using a general member or circuit, or may be configured in hardware specific to the function of each constituent. The function of each constituent may be entirely controlled by the CPU or the like. Thus, the structure to be utilized can be appropriately changed depending on a technical level when the present embodiment is performed.

### <On structure of external device>

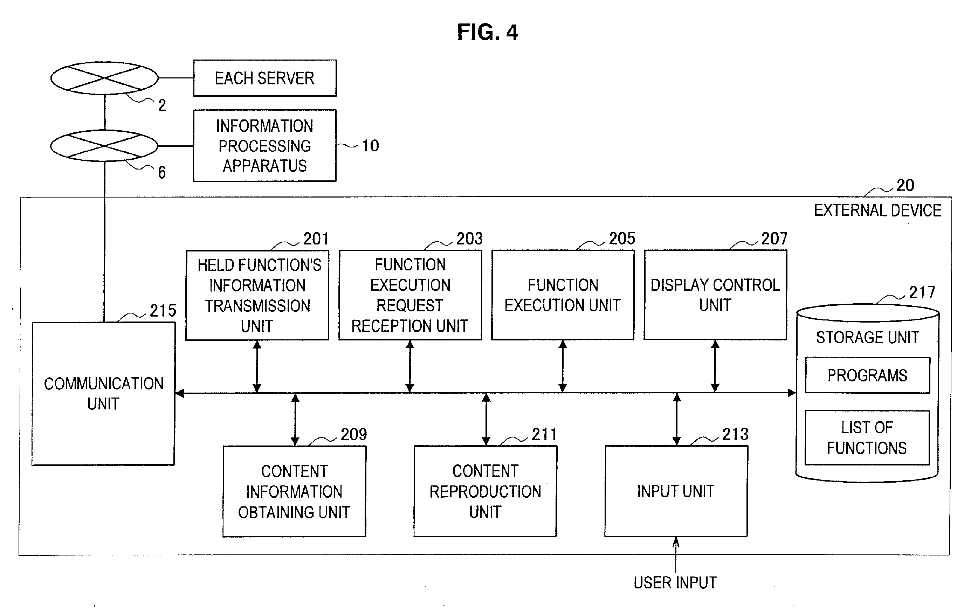

Subsequently, a structure of the external device according to the present embodiment will be described in detail with reference to FIG. 4. FIG. 4 is a block diagram for explaining the structure of the external device according to the present embodiment.

The external device 20 according to the present embodiment mainly includes a held function's information transmission unit 201, a function execution request reception unit 203, a function execution unit 205, a display control unit 207, a content information obtaining unit 209, a content reproduction unit 211, an input unit 213, a communication unit 215 and a storage unit 217 as shown in FIG. 4, for example.

The held function's information transmission unit 201 is configured to have CPU, ROM, RAM or the like, for example. The held function's information transmission unit 201 responds to a device discovery protocol multicast-distributed from the information processing apparatus 10, and transmits information on the function held therein (held function's information) to the information processing apparatus 10. More specifically, the held function's information transmission unit 201 obtains a list of functions as the held function's information on the function executable in the external device 20, which is recorded in the storage unit 217 described later, and transmits the same to the information processing apparatus 10. When the held function's information transmission unit 201 receives a request of transmitting detailed information on a certain function held therein from the information processing apparatus 10, it transmits the information such as general API on the function to the information processing apparatus 10.

When the held function's information transmission unit 201 receives a notification, query or execution request on the function held therein from the information processing apparatus 10, it transmits the related function information on other functions associated with the function on which the notification, query or execution request has been made to the information processing apparatus 10. The function associated with a certain function is specified by referring to the held function's information (list of functions) recorded in the storage unit 217 described later. The list of functions will be detailed below again.

The function execution request reception unit 203 is configured to have, for example, CPU, ROM, RAM or the like, and when a request of executing the function held by the external device 20 is transmitted from the information processing apparatus 10, receives the function execution request transmitted via the communication unit 215. When receiving the function execution request, the function execution request reception unit 203 transmits the information on the function described in the function execution request to the held function's information transmission unit 201 and the function execution unit 205.

When receiving a request of confirming an execution status of the function from the information processing apparatus 10, the unit 203 can inquire for the execution status of the function to the function execution unit 205 described later and transmits the inquiry result to the information processing apparatus 10.

The function execution unit 205 is configured to have, for example, CPU, ROM, RAM or the like, and executes the function held by the external device 20, which is described in the function execution request received by the function execution request reception unit 203. The function execution unit 205 can execute the application (program) stored in the storage unit 217 described later on the execution of the function. The function execution unit 205 can receive a signal corresponding to the user-input processing via the input device from the input unit 213 described later on the execution of the function, and can request the display control unit 207 described later to display various items of information. The function execution unit 205 can refer to various parameters or database recorded in the storage unit 217 described later on the execution of the function.

The display control unit 207 is configured to have, for example, CPU, ROM, RAM or the like, and each processing unit included in the external device 20 according to the present embodiment performs display control when displaying various items of data or information on the display unit (not shown). The display control unit 207 may refer to various parameters or database recorded in the storage unit 217 and the like described later when performing the processings, or may execute various programs recorded in the storage unit 217 and the like described later.

The content information obtaining unit 209 is configured to have CPU, ROM, RAM or the like, for example. The content information obtaining unit 209 obtains contents from the content providing server 5 present over the network or obtains attribute information of the EPG data on certain contents.

The content information obtaining unit 209 transmits the content data obtained from the content providing server 5 to the content reproduction unit 211 described later. Further, the content information obtaining unit 209 may store the obtained content data in the storage unit 217 described later.

The content reproduction unit 211 is configured to have, for example, CPU, ROM, RAM or the like, and performs a processing of reproducing content data transmitted from the content information obtaining unit 209. More specifically, the content reproduction unit 211 decodes the content data transmitted from the content information obtaining unit 209 and performs a processing of reproducing the decoded content data. At this time, the content reproduction unit 211 may perform the content reproduction processing while decoding the content data, and may perform the content reproduction processing after the completion of the decoding of the content data. The content reproduction unit 211 can utilize the data or database recorded in the storage unit 217 and the like described later.

The input unit 213 is configured to have CPU, ROM, RAM, input device or the like, for example. The input unit 213 converts an operation conducted on various input switches such as content selection switch, reproduction switch and stop switch provided in the external device 20 or on a remote controller into a predetermined signal, and transmits the signal to the corresponding processing unit. The operation conducted on the input switch or remote controller as described above may include an operation of obtaining contents or content attribute information from the content providing server 5, an operation of obtaining EPG data on specific contents from the EPG server 4, and the like.

The communication unit 215 is configured to have, for example, CPU, ROM, RAM, communication device or the like, and performs communication control on various items of data exchanged between the external device 20 and the information processing apparatus 10 and between the external 20 and various servers.

More specifically, the communication unit 215 transmits various items of data or signals to the application providing server 3, the EPG server 4, the content providing server 5 or the information processing apparatus 10 in response to a request from each processing unit provided in the external device 20 according to the present embodiment. The communication unit 215 receives various items of data or signals transmitted from the application providing server 3, the EPG server 4, the content providing server 5 or the information processing apparatus 10 and transmits the same to each processing unit provided in the external device 20 according to the present embodiment.

The communication unit 215 can utilize the storage unit 217 described later as a transmission/reception buffer.

The storage unit 217 stores therein programs to be executed by the function execution unit 205 or a list of functions as the held function's information on the functions executable in the external device 20. In addition thereto, the storage unit 217 may store therein various items of content data. The storage unit 217 may appropriately record various parameters or processings' progresses to be saved by the external device 20 according to the present embodiment when performing some processings, or various items of database. The storage unit 217 can be freely read or written by the held function's information transmission unit 201, the function execution request reception unit 203, the function execution unit 205, the display control unit 207, the content information obtaining unit 209, the content reproduction unit 211, the input unit 213, the communication unit 215 and the like.

One example of the function of the external device 20 according to the present embodiment has been described above. Each constituent may be configured to have a general member or circuit, or may be configured in hardware specific to the function of each constituent. The function of each constituent may be entirely controlled by the CPU or the like. Thus, the structure to be utilized may be appropriately changed depending on a technical level when the present embodiment is performed.

### <On functions held by apparatus>

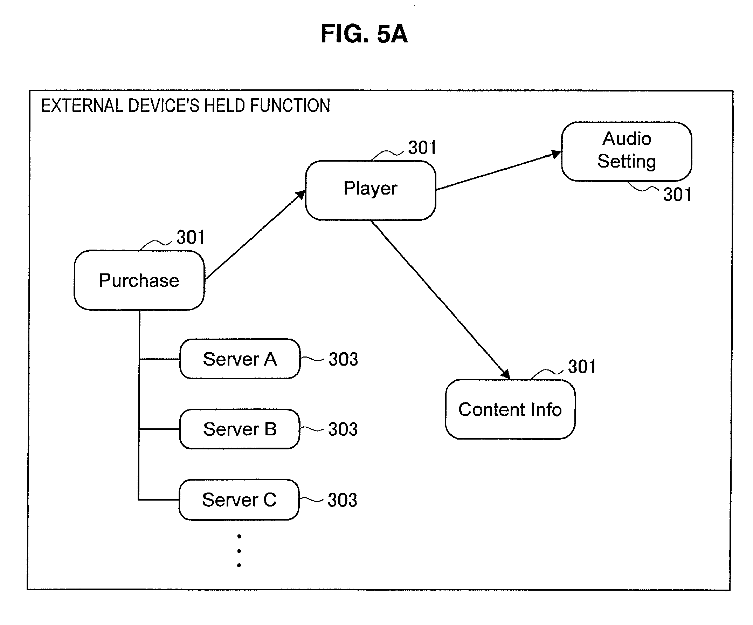

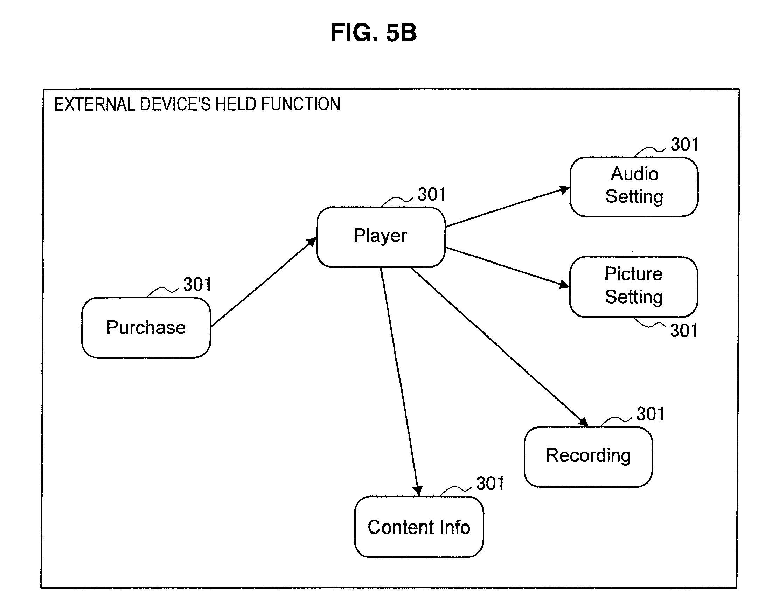

The functions held by the information processing apparatus 10 and the external device 20 according to the present embodiment and the functions associated with the individual functions will be described below in detail with reference to FIGS. 5A and 5B. FIGS. 5A and 5B are explanatory diagrams for explaining the functions held by the information processing apparatus 10 and the external device 20 according to the present embodiment.

FIGS. 5A and 5B show one example of the held function's information on the functions held by the external device 20. The external device 20 has a list of functions as the held function's information in which all the functions held by the external device 20 are described. In the list of functions, a list of functions is described as shown in FIGS. 5A and 5B, for example, and additionally associations between one function and other functions based thereon are made.

FIG. 5A shows the held function's information when the external device 20 is an audio player having a function of purchasing a music track from the content providing server. For example, the audio player holds a plurality of functions 301 as shown in FIG. 5A. FIG. 5A illustrate, as examples of the functions, "Purchase" as music content purchase function, "Player" as music content reproduction function, "Audio Setting" as music content reproduction condition setting function, "Content Info" as music content information providing function, and the like. The "Purchase" function 301 is provided with a plurality of sub functions 303 based on a difference in servers for obtaining contents. An arrow is directed from one function 301 toward other function 301, where the arrow indicates the association between the two functions. In other words, when an execution request is made on the function 301 described at the root of the arrow, the function 301 at the head of the arrow is notified as an associated function. For example, when the execution request is made on the "purchase" function 301, the "Player" function 301 associated with the "Purchase" function is notified as the associated function.

FIG. 5B shows the held function's information when the external 20 is a DVD player or Blu-ray Player having a content recording function. For example, in the player, there are illustrated "Purchase" as purchase function for various contents, "Player" as reproduction function for various contents, "Audio Setting" as setting function for music content reproduction condition, "Picture Setting" as setting function for image content reproduction condition, "Recording" as recording function for contents, "Content Info" as information providing function for music contents, and the like.

Not only the external device 20 but also the information processing apparatus 10 has the held function's information as shown in FIG. 5A or 5B so that the held functions can be notified to an externally-connected apparatus. Further, the held function's information can be utilized to specify a function which is not held by the apparatus itself but is usable in the externally-connected apparatus. The apparatus, which discloses the held function's information and receives a function execution request by the externally-connected apparatus, associates other function associated with the execution-requested function from the held function's information to provide a consistent function to the user.

The list of functions as the held function's information held by the information processing apparatus 10 or the external device 20 may illustrate a relationship between the respective functions as shown in FIGS. 5A and 5B or may be a database describing therein a link to other functions set for one function.

### <On information processing method>

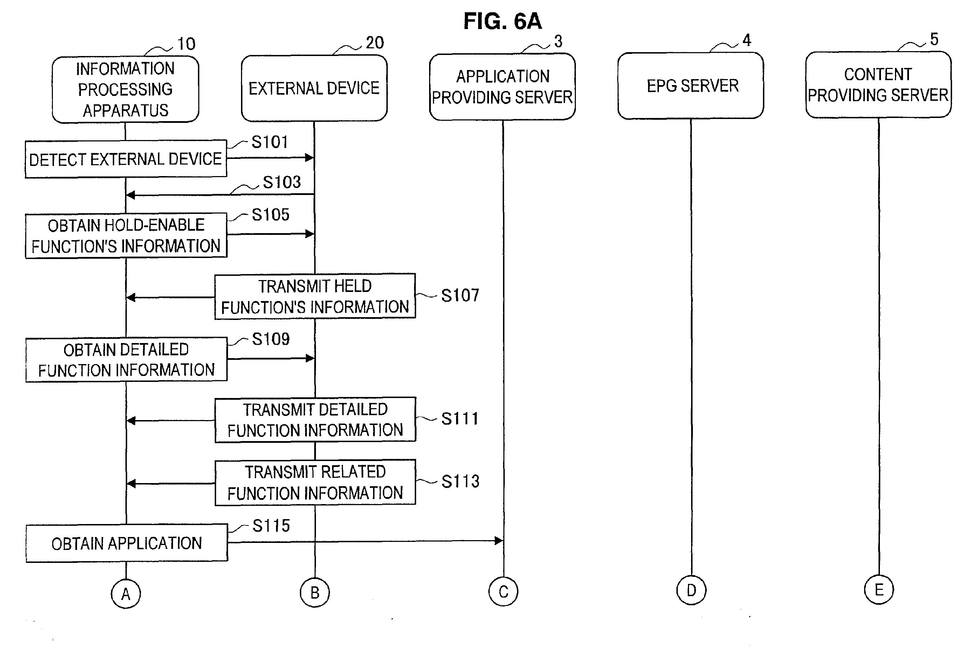

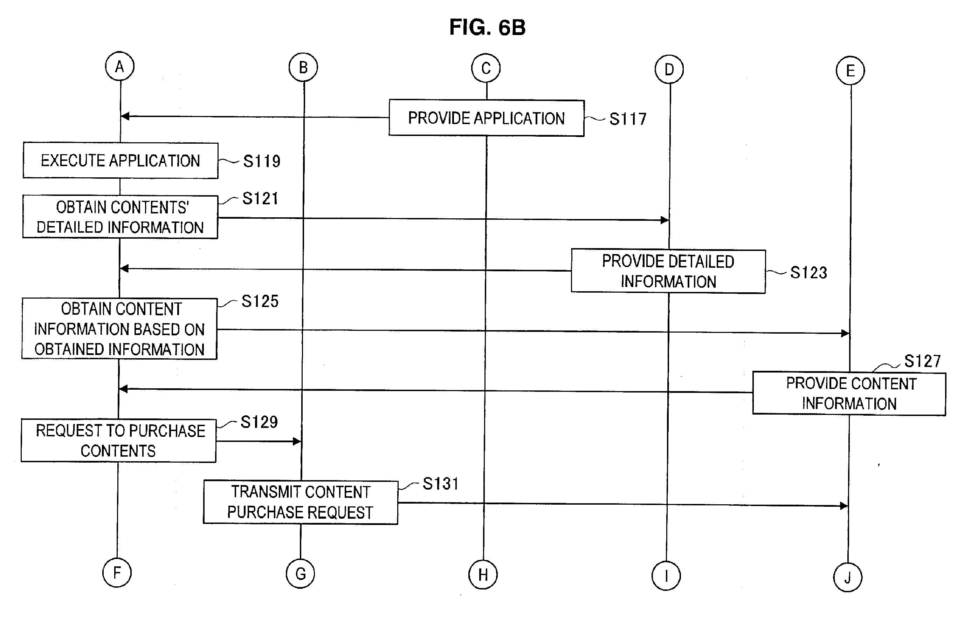

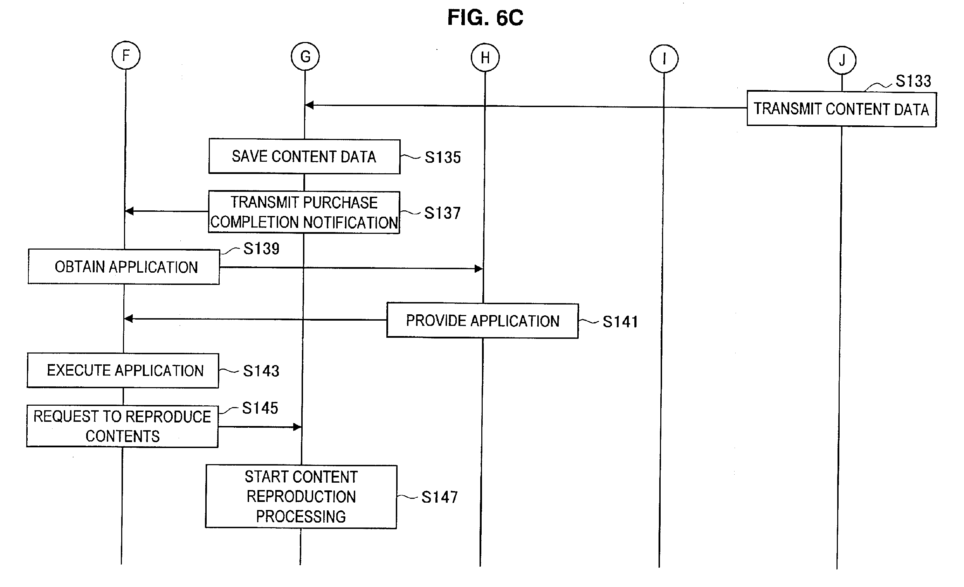

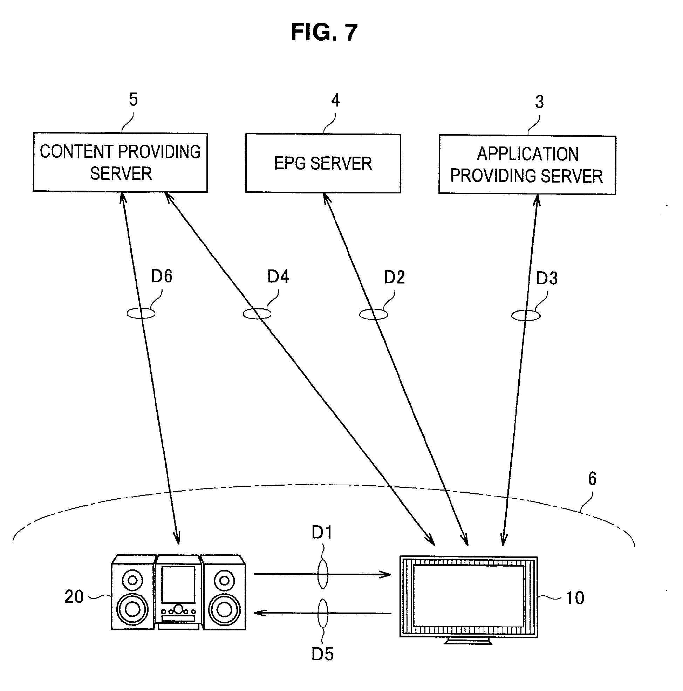

Subsequently, an information processing method according to the present embodiment will be described in detail with reference to FIGS. 6A to 7. FIGS. 6A to 6C are sequence diagrams for explaining the information processing method according to the present embodiment. FIG. 7 is an explanatory diagram for explaining the information processing method according to the present embodiment.

In the following explanation, there will be exemplified a case in which the information processing apparatus 10 is a TV receiver which has a function of obtaining and reproducing free contents from the content providing server but does not have a content purchase function, and the external device 20 is an audio player having a music content purchase function.

When the user finds an interesting music track from a music program or the like on the TV, in order to purchase the music track, a process from "finding a music track on TV program" to "actually purchasing the music track" is complicated, such as going to a shop selling CDs containing the music track or inputting information on the music track into a music track purchasable device for purchasing.

In order to solve the issue, there is considered that the TV receiver also has a music track purchase function, but it may be difficult to provide the function in the TV receiver in terms of cost.

Thus, the device having the purchase function is used from the TV receiver as in the information processing method according to the present embodiment described later so that the TV receiver itself can operate as if it had the music track purchase function.

In the following explanation, there will be described a case in which the information processing apparatus 10 is reproducing movie contents obtained from a broadcast station and tries to purchase music contents being played in the movie contents.

At first, the external device detection unit 103 of the information processing apparatus 10 broadcast-distributes a device discovery protocol to perform an external device detection processing (step S101). The held function's information transmission unit 201 of the external device 20 responds to a received device detection protocol (step S103), and the information processing apparatus 10 grasps the presence of the external device 20.

Next, the held function's information obtaining unit 105 of the information processing apparatus 10 tries to obtain the held function's information from the external device 20 (step S105). More specifically, the held function's information obtaining unit 105 transmits a request of transmitting the held function's information to the external device 20. The held function's information transmission unit 201 of the external device 20 obtains and transmits the held function's information recorded in the storage unit 217 to the information processing apparatus 10 (step S107).

The usable function specification unit 111 of the information processing apparatus 10 compares the received held function's information with the held function's information recorded in the storage unit 133 to specify the usable function. When the usable function is specified, the held function's information obtaining unit 105 transmits a notification indicating that the usable function has been specified, and a request of obtaining detailed function information, for example, to the external device 20 (step S109). The held function's information transmission unit 201 of the external device 20 transmits the detailed function information on the specified function (step S111). Further, the held function's information recorded in the storage unit 217 is referred to for transmitting the information on other functions associated with the specified function to the information processing apparatus 10 (step S113).

The specific function analysis unit 113 of the information processing apparatus 10 analyzes the received detailed information and transmits the server information obtained from the analysis result to the application specification unit 115. The application specification unit 115 specifies an application needed for utilizing a specific function of the external device 20, and transmits the same to the application obtaining unit 119. Subsequently, the application obtaining unit 119 requests the application providing server 3 to obtain the application (step S115). The application providing server 3 responds to the application obtaining request from the information processing apparatus 10, and provides the needed application to the information processing apparatus 10 (step S117).

The application obtaining unit 119 records the obtained application in the storage unit 133 and transmits the fact that the application has been obtained to the application execution unit 121. The application execution unit 121 executes the obtained application and tries to obtain detailed information such as cast information on the movie contents being viewed from the EPG server 4 (step S121). The EPG server 4 responds to the information obtaining request from the information processing apparatus 10 and provides the EPG data as attribute information containing cast information to the information processing apparatus 10 (step S123).

Subsequently, the application execution unit 121 of the information processing apparatus 10 retrieves the content providing server 5 based on the cast information or the like contained in the obtained EPG data and tries to obtain content information (step S125). The content providing server 5 responds to the request of obtaining the content information, and provides information on an artist and his/her music track (such as, title of the music track or jacket photograph) to the information processing apparatus 10 (step S127).

The application execution unit 121 which has obtained the content information transmits the obtained content information (information on artist and music track) to the execution request transmission unit 117. The execution request transmission unit 117 transmits the execution request describing therein the information on the artist and music track (that is, content purchase request) to the external device 20 (step S129).

The function execution request reception unit 203 of the external device 20 which has received the function execution request transmits the received execution request to the function execution unit 205. The function execution unit 205 transmits the content purchase request to the content providing server 5 based on the name of the artist described in the execution request and the information on the music track (step S131).

The content providing server 5 which has received the content purchase request transmits the content data corresponding to the contents on which the content purchase request has been made to the external device 20 (step S133). The external device 20 which has received the content data saves the received content data in the storage unit 217 (step S135), and transmits a purchase completion notification to the information processing apparatus 10 on which the content purchase request has been made (step S137).

The external device's function execution request unit 109 which has received the content purchase completion notification displays the fact that the content purchase has been completed on the display unit (not shown) via the display control unit 127. Thereafter, the external device's information obtaining unit 101 displays the fact that the contents can be reproduced by the external device 20 based on the related function information on the display unit (not shown) via the display control unit 127. When the user selects the processing of reproducing the purchased contents by the external device 20, the user's selection converted into a predetermined signal by the input unit 129 is transmitted to the external device's function execution request unit 109. The application specification unit 115 of the external device's function execution request unit 109 specifies the application based on the contents described in the related function information, and requests the application obtaining unit 119 to obtain the application. Subsequently, the application obtaining unit 119 requests the application providing server 3 to obtain the application (step S139). The application providing server 3 responds to the application obtaining request from the information processing apparatus 10 and provides the needed application to the information processing apparatus 10 (step S141).

The application obtaining unit 119 records the obtained application in the storage unit 133 and transmits the fact that the application has been obtained to the application execution unit 121. The application execution unit 121 executes the obtained application (step S143), and displays the GUI for the content reproduction application on the display unit (not shown) of the information processing apparatus 10. Further, the application execution unit 121 requests the execution request transmission unit 117 to transmit a request of executing the content reproduction function. The execution request transmission unit 117 which has received the request from the application execution unit 121 transmits the request of executing the content reproduction function to the external device 20 (step S145).

The function execution request reception unit 203 of the external device 20 which has received the function execution request transmits the received execution request to the function execution unit 205. The function execution unit 205 starts the content reproduction processing based on the information on the purchased contents described in the execution request (step S147).

Subsequently, a flow of the information in the information processing method according to the present embodiment will be briefly described with reference to FIG. 7.

In the information processing method according to the present embodiment, the TV receiver as the information processing apparatus 10 obtains held function's information D1 as the information on the functions held by an audio player from the audio player as the external device 20. When the user of the information processing apparatus 10 is interested in a music track being played in movie contents, the information processing apparatus 10 accesses the EPG server 4 to obtain EPG data D2 as attribute information on the relevant movie contents. The attribute information describes therein a program title of the contents being viewed, cast information and the like.

When the information processing apparatus 10 purchases music contents, the information processing apparatus 10 needs to request the external device 20 to execute the content purchase function because of the absence of the content purchase function in the information processing apparatus 10. In order to utilize the content purchase function, the information processing apparatus 10 obtains a necessary application D3 from the application providing server 3 at first.

The information processing apparatus 10 which has obtained the application executes the obtained application and at the same time inquires for the music contents based on the program title or artist information and obtains attribute information such as content name, artist name or URL of jacket photograph or other necessary information D4 for purchase. The information processing apparatus 10 which has obtained the information necessary for purchase transmits the obtained information and then transmits an execution request D5 of the content purchase function to the external device 20 having the content purchase function.

The external device 20 which has received the execution request D5 of the content purchase function executes the requested function in place of the information processing apparatus 10, and purchases the purchase-requested music contents D6 from the content providing server 5.

As described above, in the information processing method according to the present embodiment, the audio player having the purchase function (external device 20) is operated via the TV receiver (information processing apparatus 10) so that the TV receiver itself operates as if it had the music track purchase ability. In order to actually purchase a music track, three parties containing the devices within the home network 6 and the content providing server require to be controlled, but the purchase function can be realized in the three parties containing the server in the information processing method according to the present embodiment.

### <On hardware structure>

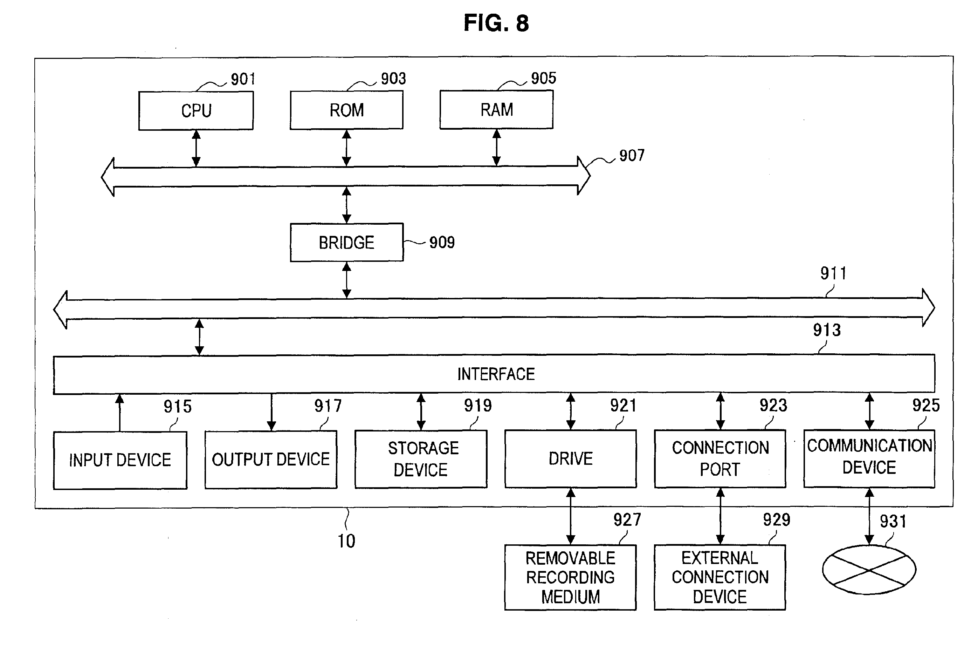

A hardware structure of the information processing apparatus 10 according to each embodiment of the present invention will be described below in detail with reference to FIG. 8. FIG. 8 is a block diagram for explaining the hardware structure of the information processing apparatus 10 according to each embodiment of the present invention.

The information processing apparatus 10 mainly includes a CPU 901, a ROM 903, a RAM 905, a host bus 907, a bridge 909, an external bus 911, an interface 913, an input device 915, an output device 917, a storage device 919, a drive 921, a connection port 923 and a communication device 925.

The CPU 901 functions as a calculation processing device and a control device, and controls all or part of the operations within the information processing apparatus 10 according to various programs recorded in the ROM 903, the RAM 905, the storage device 919 or a removable recording medium 927. The ROM 903 stores therein programs or calculation parameters used by the CPU 901. The RAM 905 temporarily stores therein programs used for execution in the CPU 901, parameters appropriately changing in the execution, and the like. These are interconnected via the host bus 907 configured to have an internal bus such as CPU bus.

The host bus 907 is connected to the external bus 911 such as Peripheral Component Interconnect/Interface (PCI) bus via the bridge 909.

The input device 915 is a user-operating operation unit such as mouse, keyboard, touch panel, button, switch and lever. The input device 915 may be a remote control unit (that is, remote controller) utilizing infrared ray or other radio wave, or may be an external connection device 929 such as cell phone or PDA corresponding to the operation of the information processing apparatus 10. Further, the input device 915 is configured to have an input control circuit for generating an input signal based on the user-input information through the operation unit and outputting the same to the CPU 901, for example. The user of the information processing apparatus 10 can input various items of data in the information processing apparatus 10 or instruct processing operations thereto by operating the input device 915.

The output device 917 is configured to have a display device such as a CRT display device, liquid crystal display device, plasma display device, EL display device and lamp, a speech output device such as a speaker and headphone, or a device capable of visually or aurally notifying the user of the obtained information such as a printer device, cell phone and facsimile. The output device 917 outputs a result obtained through various processings performed by the information processing apparatus 10, for example. Specifically, the display device displays the result obtained through various processings performed by the information processing apparatus 10 in text or image. On the other hand, the speech output device converts an audio signal made of reproduced speech data or acoustic data into an analog signal for output.

The storage device 919 is a data storage device configured as one example of the storage unit of the information processing apparatus 10, and is configured to have a magnetic storage unit device such as Hard Disk Drive (HDD), a semiconductor storage device, an optical storage device, a magnetooptical storage device or the like, for example. The storage device 919 stores therein programs or various items of data executed by the CPU 901, and various items of data obtained from the outside.

The drive 921 is a reader/writer for recording medium, and is incorporated in or externally attached to the information processing apparatus 10. The drive 921 reads out information recorded in a removable recording medium 927 such as mounted magnetic disk, optical disk, magnetooptical disk or semiconductor memory and outputs the same to the RAM 905. The drive 921 can write records in the removable recording medium 927 such as mounted magnetic disk, optical disk, magnetooptical disk or semiconductor memory. The removable recording medium 927 is a DVD media, HD-DVD media, Blu-ray media, CompactFlash (registered trademark) (CF), memory stick or Secure Digital memory card (SD memory card) and the like, for example. The removable recording medium 927 may be an Integrated Circuit card (IC card) mounting thereon a non-contact IC chip, electronic device or the like.

The connection port 923 is a port for directly connecting devices to the information processing apparatus 10, such as Universal Serial Bus (USB) port, IEEE1394 port such as i.Link, Small Computer System Interface (SCSI) port, RS-232C port, optical audio terminal, High-definition Multimedia Interface (HDMI) port. The external connection device 929 is connected to the connection port 923 so that the information processing apparatus 10 can directly obtain various items of data from the external connection device 929 or provide various items of data to the external connection device 929.

The communication device 925 is a communication interface configured to have a communication device for connecting to a communication network 931, for example. The communication device 925 is a communication card for wired or wireless LAN (Local Area Network), Bluetooth or WUSB (Wireless USB), a router for optical communication, a router for Asymmetric Digital Subscriber Line (ADSL), or a modem for various communications. The communication device 925 can exchange a signal and the like according to a predetermined protocol such as TCP/IP over Internet or with other communication devices, for example. The communication network 931 connected to the communication device 925 is configured to have a wired- or wireless-connected network or the like, and may be Internet, home LAN, infrared communication, radio wave communication, satellite communication or the like, for example.

One example of the hardware structure capable of realizing the functions of the information processing apparatus 10 according to each embodiment of the present invention has been described above. Each constituent described above may be configured to have a general member, or may be configured in hardware specific to the function of each constituent. Therefore, the hardware structure to be utilized can be appropriately changed depending on a technical level when the present embodiment is performed.

A hardware structure of the external device 20 according to each embodiment of the present invention has substantially the same structure as the hardware structure of the information processing apparatus 10 according to each embodiment of the present invention and obtains the similar effects. Therefore, the detailed description thereof will not be described.

The information processing apparatus 10 according to each embodiment of the present invention can be provided as a program having the following functions. In other words, the program is directed for realizing an external device's information obtaining function for obtaining external device's information containing the held function's information on the functions held by the external device from the network-connected external device, an application obtaining function for obtaining an application used for utilizing the external device execution request function among the held function's information from the network-connected application providing server, and an external device's function execution request function for requesting the external device to execute the functions held by the external device based on the obtained external device's information and the application.

With the structure, the computer program is stored in the storage unit included in the computer and read in the CPU included in the computer for execution so as to cause the computer to function as the information processing apparatus. There can be provided a computer readable recording medium which records therein the computer program. The recording medium is a magnetic disk, optical disk, magnetooptical disk, flash memory or the like. The computer program described above may be distributed over a network, for example, without using the recording medium.

The external device 20 according to each embodiment of the present invention can be provided as a program having the following function. In other words, the program is directed for realizing a held function's information transmission function for transmitting held function's information on the executable functions held by the external device 20 to the network-connected information processing apparatus and for, when a function execution request is made from the information processing apparatus, transmitting the related function information on other functions associated with the execution-requested function from the information processing apparatus to the information processing apparatus, and a function execution function for executing an executable function on which the execution request is made from the information processing apparatus.

With the above structure, the computer program is stored in the storage unit included in the computer and is read in the CPU included in the computer for execution so as to cause the computer to function as the external device. Further, there can be provided a computer readable recording medium which records therein the computer program. The recording medium is a magnetic disk, optical disk, magnetooptical disk, flash memory or the like, for example. The computer program described above may be distributed over a network, for example, without using the recording medium.

### <Conclusion>

As described above, with the information processing apparatus and the information processing method according to each embodiment of the present invention, a function execution request can be transmitted from the information processing apparatus to an apparatus (external device) having a function not held by the information processing apparatus so that the information processing apparatus and the external device can cooperatively operate. Thus, the information processing apparatus itself can operate as if it had the function not held therein.

Since the function information on other functions associated with the execution-requested function can be provided from the external device, a consistent processing can be provided to the user of the information processing apparatus from an execution request function to a function execution request for the function.

In this manner, with the information processing apparatus and the information processing method according to each embodiment of the present invention, the functions held by the respective devices can be mutually utilized easily between the devices connected via a home network.

It should be understood by those skilled in the art that various modifications, combinations, sub-combinations and alterations may occur depending on design requirements and other factors insofar as they are within the scope of the appended claims or the equivalents thereof.
The present application contains subject matter related to that disclosed in Japanese Priority Patent Application JP 2008-209551 filed in the Japan Patent Office on August/18/2008.

## Claims

1. An information processing apparatus comprising:
an external device's information obtaining unit (101) for obtaining external device's information containing held function's information on functions held by an external device (20) from the network-connected external device;
an application obtaining unit (119) for obtaining an application used for utilizing a function requested to be executed by the external device (20) from a network-connected application providing server, the function being contained in the held function's information; and
an external device's function execution request unit (109) for requesting the external device (20) to execute a function held by the external device (20) based on the obtained external device's information and the application.

2. The information processing apparatus according to claim 1, wherein the external device's information obtaining unit (101) obtains server information on a server over a network utilized for the function described in the held function's information from the external device (20) which has obtained the held function's information, and
the application obtaining unit (119) specifies the application to be obtained from the application providing server based on the server information.

3. The information processing apparatus according to claim 2, wherein an external device's function execution request unit (109) specifies a protocol used for communication with the server used in the function based on the server information.

4. The information processing apparatus according to claim 1, comprising function information on functions executable in the information processing apparatus (10),
wherein the external device's function execution request unit (109) requests the external device (20) to execute functions which are not described in the function information on the executable functions and are contained in the held function's information.

5. The information processing apparatus according to claim 1, wherein the external device's information obtaining unit (101) obtains, from the external device (20), related function information on other functions of the external device (20) associated with the function whose execution can be requested to the external device (20).

6. An information processing method comprising the steps of:
obtaining external device's information containing held function's information on functions held by an external device (20) from the network-connected external device;
obtaining an application used for utilizing a function requested to be executed by the external device (20) from a network-connected application providing server, the function being contained in the held function's information; and
requesting the external device (20) to execute functions held by the external device (20) based on the obtained external device's information and the application.

7. An information processing system comprising an information processing apparatus according to any one of claims 1 to 5 and an external device, wherein
the external device (20) includes
a held function's information transmission unit (201) for transmitting held function's information on executable functions held by the information processing apparatus (10) to the network-connected information processing apparatus; and
a function execution unit (205) for executing the executable function requested to execute from the information processing apparatus (10),
wherein when the function execution request is made from the information processing apparatus (10), the held function's information transmission unit (201) transmits related function information on other functions associated with the function requested to execute from the information processing apparatus (10) to the information processing apparatus.
